(19) Europäisches Patentamt
European Patent Office
Office européen des brevets

(11) **EP 4 174 395 A1**

(12) **EUROPEAN PATENT APPLICATION**
published in accordance with Art. 153(4) EPC

(43) Date of publication:
**03.05.2023 Bulletin 2023/18**

(21) Application number: **21851203.6**

(22) Date of filing: **24.06.2021**

(51) International Patent Classification (IPC):
**F24F 11/63** (2018.01)      **F24F 11/64** (2018.01)
**F24F 110/10** (2018.01)

(52) Cooperative Patent Classification (CPC):
**F24F 11/63; F24F 11/64;** F24F 2110/10

(86) International application number:
**PCT/JP2021/024040**

(87) International publication number:
**WO 2022/024616 (03.02.2022 Gazette 2022/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2020 JP 2020129410**

(71) Applicant: **DAIKIN INDUSTRIES, LTD.**
**Osaka-shi, Osaka 530-0001 (JP)**

(72) Inventors:
• **EMOTO, Shiori**
  **Osaka-shi, Osaka 530-8323 (JP)**
• **NISHINO, Atsushi**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**

(54) **TEMPERATURE ESTIMATION DEVICE, AIR CONDITIONER, AND TEMPERATURE CALCULATION METHOD**

(57)     A temperature estimation device (10) includes: an acquisition unit (11A) configured to acquire environmental information, the environmental information being a value indicative of an environment experienced by a subject in the past; and a control unit (13) configured to calculate out an estimated comfortable temperature on the basis of the environmental information, the estimated comfortable temperature being a temperature estimated to be a temperature comfortable for the subject. The environmental information preferably includes an experienced temperature, the experienced temperature being an air temperature of the environment experienced by the subject in the past.

FIG.1

## Description

### TECHNICAL FIELD

The present disclosure relates to a temperature estimation device, an air conditioner, and a temperature calculation method.

### BACKGROUND ART

An air conditioner described in Patent Document 1 includes a control device, a calendar recording means, and a set temperature changing means. The control device is configured to switch over operating modes of heating, dehumidification, and cooling, according to relationships among outdoor air temperature, indoor temperature, and set temperature. The set temperature changing means changes the set temperature according to the calendar stored in the calendar recording means.

### CITATION LIST

### PATENT DOCUMENT

Patent Document 1: Japanese Unexamined Patent Publication No. 2009-092322

### SUMMARY OF THE INVENTION

### TECHNICAL PROBLEM

However, there are individual differences among people as to how they feel the air temperatures. For example, in a room cooled by air conditioning, someone would feel the temperature therein is the most comfortable, but someone else would feel the temperature is too high or too low.

In such a configuration in which the set temperature is changed according to the calendar as in the air conditioner described in Patent Document 1, the individual differences as to feeling on the air temperature are not taken into consideration and therefore the set temperature would not be the temperature at which a user (subject) feels comfortable.

An object of the present disclosure is to achieve calculation of estimated comfortable temperature estimated to be a comfortable temperature for the subject.

### SOLUTION TO THE PROBLEM

A first aspect of the present disclosure is directed to a temperature estimation device (10). The temperature estimation device (10) includes: an acquisition unit (11A) configured to acquire environmental information, the environmental information being a value indicative of an environment experienced by a subject in the past; and a control unit (13) configured to calculate out an estimated comfortable temperature on the basis of the environmental information, the estimated comfortable temperature being a temperature estimated to be a comfortable temperature for the subject.

The first aspect allows the calculation of the estimated comfortable temperature, which is estimated to be a comfortable temperature for the subject.

A second aspect of the present disclosure is an embodiment of the first aspect. In the second aspect, the environmental information includes an experienced temperature, the experienced temperature being an air temperature of the environment experienced by the subject in the past.

The second aspect allows the calculation of the estimated comfortable temperature from the experienced temperature of the subject.

A third aspect of the present disclosure is an embodiment of the first or second aspect. In the third aspect, the temperature estimation device further includes: a storage (12) configured to store therein correlation information (12A) indicative of a correlation between the environmental information and the estimated comfortable temperature, wherein the control unit (13) is configured to perform the calculation of the estimated comfortable temperature further on the basis of the correlation information (12A).

The third aspect allows the calculation of the estimated comfortable temperature for the subject on the basis of the correlation information (12A) and the experienced temperature of the subject.

A fourth aspect of the present disclosure is directed to an air conditioner (30). The air conditioner (30) includes a temperature estimation device (10) described above.

The fourth aspect allows the air conditioner (30) to operate on the basis of the estimated comfortable temperature.

A fifth aspect of the present disclosure is directed to a temperature calculation method. The temperature calculation method includes: acquiring environmental information, the environmental information being a value indicative of an environment experienced by a subject in the past; and calculating out an estimated comfortable temperature on the basis of the environmental information, the estimated comfortable temperature being a temperature estimated to be a comfortable temperature for the subject.

The fifth aspect allows the calculation of the estimated comfortable temperature, which is estimated to be a comfortable temperature for the subject.

A sixth aspect of the present disclosure is an embodiment of the fifth aspect. In the sixth aspect, the environmental information includes an experienced temperature, the experienced temperature being an air temperature of the environment experienced by the subject in the past, and the acquiring includes acquiring the experienced temperature by measuring an air temperature with a temperature sensor (21) carried by the subject.

The sixth aspect allows the acquisition of the experienced temperature through the subject's carrying the temperature sensor (21).

The seventh aspect of the present disclosure is an embodiment of the fifth aspect. In the fifth aspect, the environmental information includes an experienced temperature, the experienced temperature being an air temperature of the environment experienced by the subject in the past, and the acquiring includes: acquiring positional information indicative of a position of the subject; and acquiring, as the experienced temperature, an air temperature measured at a measurement point closest to the position indicated by the positional information among a plurality of measurement points.

The seventh aspect allows the acquisition of the experienced temperature without the subject's carrying the temperature sensor (21).

BRIEF DESCRIPTION OF THE DRAWINGS

FIG. 1 is a block diagram illustrating a temperature estimation system according to one embodiment of the present invention.
FIG. 2 is a schematic view illustrating an operation of the temperature estimation system.
FIG. 3 is a block diagram illustrating a first example of an output device.
FIG. 4 is a block diagram illustrating a second variation of the output device.
FIG. 5 is a view illustrating a first list.
FIG. 6 is a graph plotting the estimated comfortable temperature against time.
FIG. 7 is a view illustrating a second list.
FIG. 8 is a graph illustrating a moving average of the estimated comfortable temperature.
FIG. 9 is a view illustrating a third list.
FIG. 10 is a block diagram illustrating a configuration of a variation of the temperature estimation system.

DESCRIPTION OF EMBODIMENTS

One embodiment of the present invention will be described with reference to the drawings. Note that like reference characters denote the same or equivalent components in the drawings, and the detailed description thereof, the description of advantages associated therewith, and other descriptions will not be repeated.

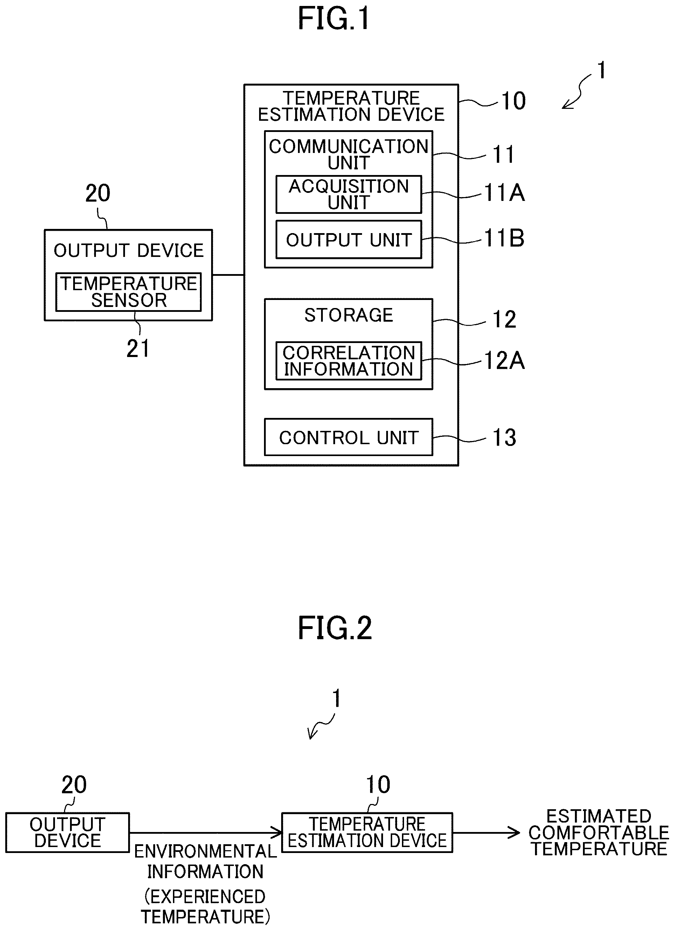

A temperature estimation system (1) according to one embodiment of the present invention will be described with reference to FIGS. 1 and 2. FIG. 1 is a block diagram illustrating the configuration of the temperature estimation system (1). FIG. 2 is a schematic view illustrating an operation of the temperature estimation system (1).

-General Configuration-

As illustrated in FIGS. 1 and 2, the temperature estimation system (1) includes a temperature estimation device (10) and an output device (20).

The output device (20) is configured to output environmental information. The environmental information is a value indicative of an environment experienced by a subject in the past. In the environmental information, the value indicative of an environment may include, for example, a temperature, predicted mean vote (PMV), standard new effective temperature (SET*), and/or wet bulb globe temperature (WBGT). In the environmental information, the value indicative of an environment is not limited to a value based on one type of physical quantity such as temperature but may be a value based on a plurality of types of physical quantities such as temperature and humidity such as PMV, SET*, or WBGT. In this embodiment, the environmental information is an experienced temperature indicative of an air temperature of an environment experienced by the subject in the past. The output device (20) includes a temperature sensor (21) for measuring an air temperature.

The temperature estimation device (10) is a device configured to calculate out an estimated comfortable temperature, which is estimated to be a comfortable temperature for the subject. In this embodiment, the temperature estimation device (10) is a terminal such as a smartphone or a personal computer (PC). In this embodiment, the temperature estimation device (10) is configured such that an application program for calculation process for calculating out the estimated comfortable temperature is installed therein and that the temperature estimation device (10) executes the application program to perform the calculation process.

As illustrated in FIGS. 1 and 2, the temperature estimation device (10) includes a communication unit (11), a storage (12), and a control unit (13).

The communication unit (11) is a device for communicating with an external device such as the output device (20). The communication unit (11) is communicably connected to the output device (20) in a wired or wireless manner. The communication unit (11) includes, for example, at least one of a device for performing wireless communication (such as a wireless LAN module) or a device for performing wired communication (such as a communication port connected to a communication cable). The communication unit (11) includes an acquisition unit (11A) configured to acquire information, and an output unit (11B) configured to output information. The acquisition unit (11A) acquires environmental information (experienced temperature) output from the output device (20).

The storage (12) includes a main memory (e.g., a semiconductor memory), such as a flash memory, a read only memory (ROM), and a random access memory (RAM), and may further include an auxiliary memory (e.g., a hard disk drive, a solid state drive (SSD), a secure digital (SD) memory card, or a universal serial bus (USB) flash memory). The storage (12) is configured to store therein various computer programs executable by the control unit (13).

The storage (12) stores therein correlation information (12A). The correlation information (12A) is information (such as a calculation formula, a table, a graph, a diagram, or a map) indicating a correlation between the environmental information (experienced temperature) and the estimated comfortable temperature. The correlation information (12A) will be described later.

The control unit (13) includes a processor, such as a CPU or an MPU. The control unit (13) executes a computer program stored in the storage (12) so as to control elements of the temperature estimation device (10).

-Outline of Operation of Temperature Estimation System (1)-

The outline of an operation of the temperature estimation system (1) will be described with reference to FIGS. 1 and 2.

As illustrated in FIGS. 1 and 2, the temperature sensor (21) of the output device (20) is portable by the subject and is configured to measure the air temperature of the environment where the subject is present (a surrounding temperature around the subject). The output device (20) outputs, to the temperature estimation device (10), information indicating a measurement result of the temperature sensor (21) as an experienced temperature of the subject. The temperature estimation device (10) calculates out an estimated comfortable temperature for the subject on the basis of the experienced temperature acquired from the output device (20).

-First Variation of the Output Device (20)-

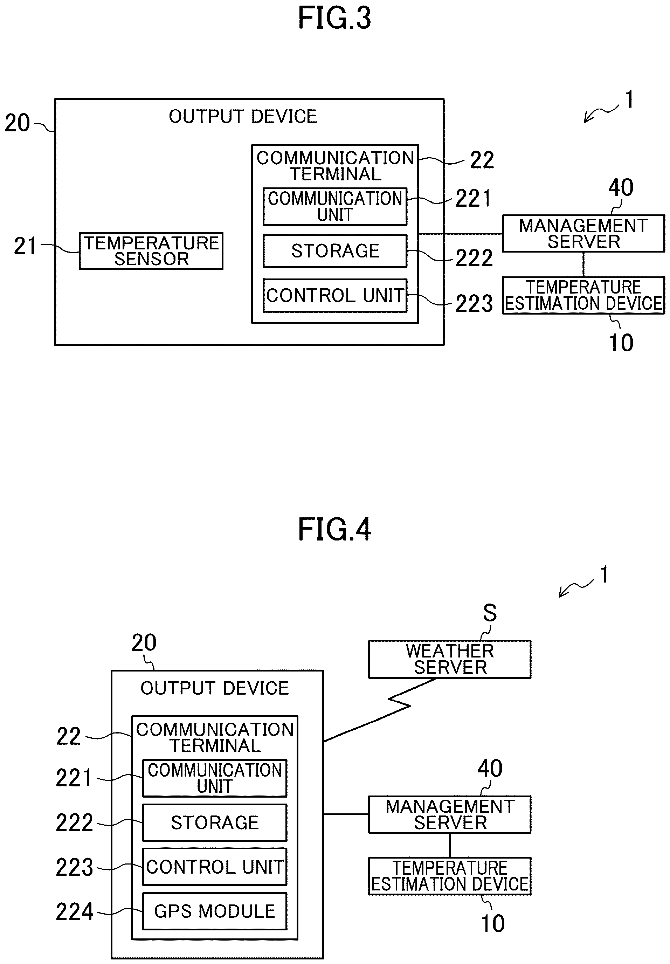

Referring to FIG. 3, a first variation of the output device (20) will be described below. FIG. 3 is a block diagram illustrating the first example of the output device (20). The output device (20) in this embodiment includes the temperature sensor (21) (see FIG. 1), but the first variation differs from this embodiment in that the output device (20) includes a temperature sensor (21) and a communication terminal (22).

A general configuration of the first variation of the output device (20) will be described below.

As illustrated in FIG. 3, the output device (20) includes the temperature sensor (21) and the communication terminal (22). The communication terminal (22) is, for example, a terminal having a communication function, such as a smartphone or a PC. The communication terminal (22) includes a communication unit (221), a storage (222), and a control unit (223). The communication unit (221) includes, for example, a wireless LAN module, and/or a communication port. The communication unit (221) is connected to the temperature sensor (21) in a wired or wireless manner, and acquires the information (experienced temperature) indicative of the measurement result of the temperature sensor (21). The storage (222) includes a main memory, such as a flash memory, a ROM, or a RAM, and may further include an auxiliary memory. The storage (222) stores therein various computer programs executable by the control unit (223). The control unit (13) includes a processor, such as a CPU or an MPU. The control unit (223) executes a computer program stored in the storage (222) so as to control elements of the communication terminal (22).

The temperature estimation system (1) further includes a management server (40). The management server (40) is a server for managing the environmental information (experienced temperature) output from the output device (20). The management server (40) is communicably connected to each of the output device (20) and the temperature estimation device (10).

A usage example of the first variation of the output device (20) will be described below.

The subject spends a predetermined time (e.g., one week), carrying the output device (20) (temperature sensor (21) and communication terminal (22)). The output device (20) outputs the experienced temperature of the subject to the management server (40) by the communication function of the communication terminal (22) every predetermined time (e.g., every one hour), the experienced temperature being measured by the temperature sensor (21). The management server (40) accumulates a history of the experienced temperature of the subject, which has been output from the communication terminal (22). The temperature estimation device (10) acquires the history of the experienced temperature of the subject from the management server (40), and calculates out an estimated comfortable temperature for the subject on the basis of the history of the experienced temperature thus acquired.

-Second Variation of the Output Device (20)-

Referring to FIG. 4, a second variation of the output device (20) will be described below. FIG. 4 is a block diagram illustrating the second variation of the output device (20). The output device (20) in this embodiment includes the temperature sensor (21) (see FIG. 1), but the second variation differs from this embodiment in that the output device (20) includes a communication terminal (22).

A general configuration of the second variation of the output device (20) will be described below.

As illustrated in FIG. 4, the output device (20) includes the communication terminal (22). The communication terminal (22) includes a communication unit (221), a storage (222), a control unit (223), and a positional information acquiring unit (224). The communication unit (221) is communicably connected to a weather server (S). The weather server (S) is a server that collects information indicative of air temperatures measured at a plurality of measurement points. The positional information acquiring unit (224) is configured to acquire positional information of the communication terminal (22). In other words, the positional information of the communication terminal (22) indicates positional information of the subject carrying the communication terminal (22). In the following, the positional information of the communication terminal (22) may be referred to as the positional information of the subject. The positional information acquiring unit (224) includes a GPS module and is configured to acquire the positional information of the subject by using the GPS module. The GPS module receives radio waves from Global Positioning System (GPS) satellites and works out the positional information (information indicating a latitude and a longitude) of the subject from the received radio waves.

A usage example of the second variation of the output device (20) will be described below.

As illustrated in FIG. 4, the subject spends a predetermined time (e.g., one week), carrying the output device (20) (communication terminal (22)). The communication terminal (22) acquires the positional information of the subject by the positional information acquiring unit (224). The communication terminal (22), which has acquired the positional information of the subject, communicates with the weather server (S) via the communication unit (221). From the weather server (S), the communication terminal (22) acquires, as the experienced temperature of the subject, an air temperature of a measurement point closest to the position indicated by the positional information of the subject from among the air temperatures of the plurality of measurement points collected by the weather server (S). The communication terminal (22) outputs, to the management server (40), the experienced temperature of the subject acquired.

The communication terminal (22) performs, for example, every predetermined time (e.g., one hour), the process of acquiring the experienced temperature of the subject from the weather server (S).

Each of the first variation of the output device (20) (see FIG. 3), and the second variation of the output device (20) (see FIG. 4) may be configured so that the temperature estimation device (10) has the function of the management server (40) and the storage (12) of the temperature estimation device (10) stores therein the history of the experienced temperature of the subject.

-Procedure of Calculating Out Estimated Comfortable Temperature-

Next, a procedure of calculating out the estimated comfortable temperature by the control unit (13) of the temperature estimation device (10) will be described, referring to FIGS. 1, and 5 to 9.

The control unit (13) of the temperature estimation device (10) calculates out the estimated comfortable temperature, referring to the correlation information (12A) (see FIG. 1).

The correlation information (12A) is expressed by Equation 1 below:

[Math 1]

$$CT = 0.31*T+17.8$$

"CT" is the estimated comfortable temperature. "T" is an assigned value. The assigned value T is a value based on the experienced temperature. The coefficients of Equation 1 are statistically worked out in advance from the correlation between the estimated comfortable temperature CT and the assigned value T.

The control unit (13) of the temperature estimation device (10) calculates out an estimated comfortable temperature CT on the basis of the experienced temperature acquired by the acquisition unit (11A). More specifically, the control unit (13) works out the assigned value T on the basis of the experienced temperature acquired by acquisition unit (11A), and calculates out the estimated comfortable temperature CT on the basis of the assigned value T and the correlation information (12A). In this embodiment, the control unit (13) calculates out the estimated comfortable temperature CT by assigning the assigned value T in Equation 1 representing the correlation information (12A).

Hereinafter, first to sixth examples of the assigned value T will be described.

-First Example of the Assigned Value T-

In the first example, the assigned value T is represented by an average value of the experienced temperatures for N days. More specifically, in the first example, the assigned value T is represented by Equation 2 below:

[Math 2]

$$T = (\Sigma Ti)/N$$

"N" is a natural number. "i" is an integer equal to or more than 1 but not more than N ($1 \leq i \leq N$). "Ti" is an experienced temperature on Day i among Day 1 to Day N. "$\Sigma Ti$" indicates the total sum of experienced temperatures (experienced temperature T1 to experienced temperature TN) for N days.

As described above, the experienced temperature Ti is the experienced temperature on Day i. However, if the experienced temperature is measured multiple times on Day i (e.g., the experienced temperature is measured every 4 hours on Day i), so that there are multiple experienced temperatures on Day i, an average or median value, for example, of the multiple experienced temperatures on Day i is set as the experienced temperature Ti for Day i.

-Second Example of the Assigned Value T-

In the second example, the assigned value T is represented by a median value of the experienced temperatures for N days.

-Third Example of the Assigned Value T-

In the third example, the assigned value T is represented by a weighted average of the experienced temperatures for N days, as represented by Equation 3. More specifically, the third example is such that the assigned value T is represented by Equation 3 below:

[Math 3]

$$T = \Sigma \, (ai{*}Ti)$$

According to Equation 3, "ai" is such a real number that the total sum of a1 to aN is 1 ($\Sigma$ai = 1). According to Equation 3, $\Sigma$(ai*Ti) is the total sum of (a1*T1) to (aN*TN).

In this embodiment, a1 to aN are set such that a later-measured experienced temperature among the experienced temperature T1 to the experienced temperature TN gives a greater influence on the assigned value T. More specifically, a1 to aN are greater in the ascending order of a1 to aN (i.e., a1<a2<...<a(N-1)<aN).

-Fourth Example of the Assigned Value T-

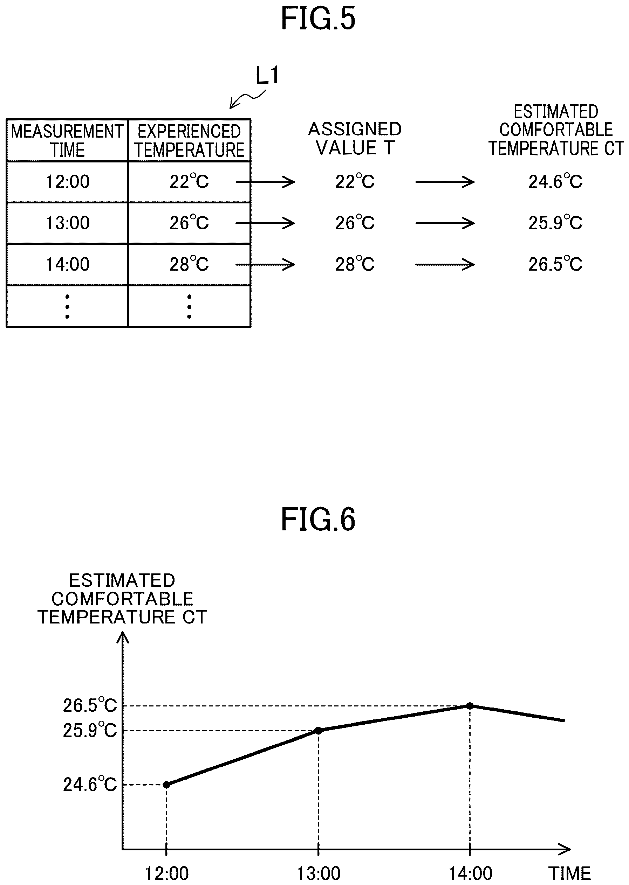

Referring to FIGS. 5 and 6, the fourth example of the assigned value T will be described. FIG. 5 is a view showing a first list (L1). FIG. 6 is a graph plotting the estimated comfortable temperature CT against time.

As illustrated in FIG. 5, the first list (L1) is created based on a plurality of experienced temperatures output from the output device (20). The first list (L1) is stored, for example, in the storage (12) of the temperature estimation device (10) or in the management server (40) (see FIGS. 3 and 4).

The first list (L1) is configured such that a plurality of experienced temperatures are listed in time series. The first list (L1) is configured such that a plurality of experienced temperatures are associated with the measurement times at which the respective experienced temperatures were measured.

Measurement time at which the experienced temperature was measured is output together with the experienced temperature from the output device (20). More specifically, the output device (20), which outputs an experienced temperature, creates and outputs association information in which the experienced temperature and the measurement time of the experienced temperature are associated with each other. Consequently, the first list (L1) in which the experienced temperature and the measurement time of the experienced temperature are associated with each other is created.

In the fourth example, the assigned value T is any one of the plurality of experienced temperatures included in the first list (L1). The control unit (13) assigns the respective experienced temperatures included in the first list (L1) into the assigned value T in Equation 1 to calculate out the estimated comfortable temperatures CT corresponding to the respective measurement times included in the first list (L1) (see FIG. 5). In this way, the control unit (13) can calculate out a plurality of estimated comfortable temperatures CT corresponding to time series. As a result of this, a user can check how the estimated comfortable temperature CT changes over time (for example, a change of the estimated comfortable temperature CT per unit of time, a change of the estimated comfortable temperature CT per month, a change of the estimated comfortable temperature CT per season, etc.) (see FIG. 6). Here, a graph in FIG. 6 shows a change of the estimated comfortable temperature CT per unit of time.

In this embodiment, the measurement times in the first list (L1) are on an hourly basis (see FIG. 5). However, the present invention is not limited to this. The measurement times in the first list (L1) may be, for example, on a daily basis or a monthly basis.

-Fifth Example of the Assigned Value T-

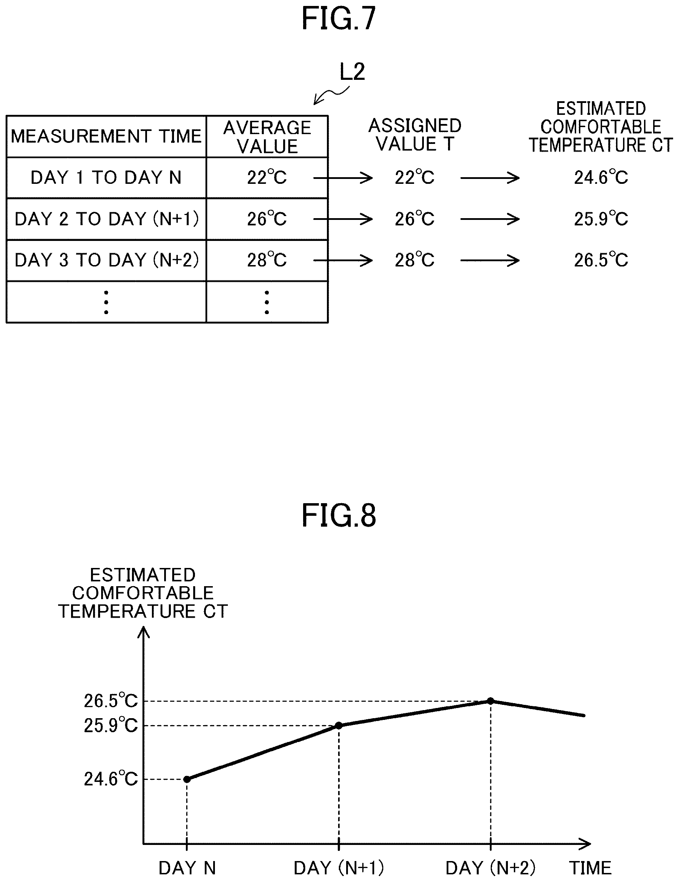

Referring to FIGS. 7 and 8, the fifth example of the assigned value T will be described. FIG. 7 is a view illustrating a second list (L2). FIG. 8 is a graph illustrating a moving average of the estimated comfortable temperature CT.

As illustrated in FIG. 7, the second list (L2) is created on the basis of a plurality of experienced temperatures output from the output device (20). The second list (L2) is stored, for example, in the storage (12) of the temperature estimation device (10) or in the management server (40) (see FIGS. 3 and 4). The second list (L2) is created on the basis of a plurality of average values of experienced temperatures. The plurality of average values of the experienced temperatures are an average value of the experienced temperatures of Day n to Day (N + n-1) (where n = 1, 2, 3, ...). That is, the plurality of average values of the experienced temperatures includes an average value of the experienced temperatures of Day 1 to Day N, an average value of experienced temperatures from Day 2 to Day (N + 1), an average value of experienced temperatures from Day 3 to Day (N + 2), and so on.

In the fifth example, the assigned value T is any one of the plurality of average values included in the second list (L2). The control unit (13) assigns the respective average values included in the second list (L2) into the assigned value T in Equation 1 to calculate out the estimated comfortable temperatures CT corresponding to the respective measurement times included in the second list (L2). In this way, the control unit (13) can calculate out the moving average of the estimated comfortable temperatures CT (see FIG. 8).

In this embodiment, the measurement times in the second list (L2) are on a daily basis (see FIG. 7). However, the present invention is not limited to this. The measurement times in the second list (L2) may be, for example, on an hourly basis or a monthly basis.

Optionally, in the fifth example, instead of the plurality of average values of experienced temperatures, a plurality of median values of experienced temperatures (for example, median values of Day n to Day (N + n-1) (where n = 1, 2, 3, ...)) may be used, or a weighted average value of the plurality of experienced temperatures (for example, a weighted average value of Day n to Day (N + n-1) (where n = 1, 2, 3, ...)) may be used.

-Sixth Example of the Assigned Value T-

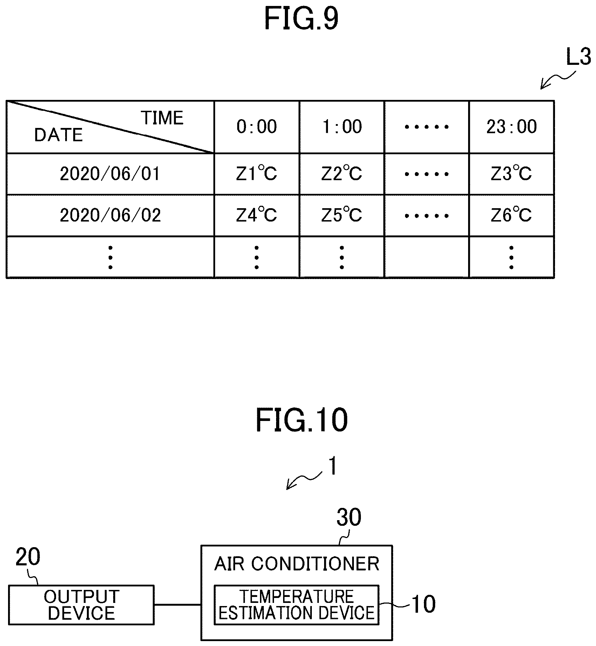

FIG. 9 shows a third list (L3). The third list (L3) is created on the basis of a plurality of experienced temperatures output from the output device (20). The third list (L3) is stored, for example, in the storage (12) of the temperature estimation device (10) or in the management server (40) (see FIGS. 3 and 4).

As illustrated in FIG. 9, the third list (L3) is configured to show associations between a plurality of experienced temperatures (z1°C, z2°C, ...) and measurement times (dates and times) in matrix. In the third list (L3), the experienced temperatures are ones that will be measured at measurement date and time corresponding thereto. For example, the third list (L3) shows that the experienced temperature z1°C will be measured at 00:00 on June 1, 2020. In the third list (L3), the experienced temperatures may be a plurality of average values or median values of experienced temperatures measured within a predetermined time range including the measurement date and time corresponding thereto. For example, in the third list (L3), the experienced temperature z1 may be an average value or a median value of experienced temperatures measured in a time range from 00:00 to 01:00 on June 1, 2020.

In the sixth example, the assigned value T is any one of the plurality of experienced temperatures (z1°C, z2°C, ...) included in the third list (L3). The control unit (13) assigns the respective experienced temperatures included in the third list (L3) into the assigned value T in Equation 1 to calculate out the estimated comfortable temperatures CT corresponding to the respective measurement dates and times included in the third list (L3).

-Advantages of This Embodiment-

As described above with reference to FIGS. 1 to 9, the control unit (13) calculates out an estimated comfortable temperature on the basis of experienced temperatures of a subject, the estimated comfortable temperature being a temperature estimated to be a comfortable temperature for the subject. Thus, the temperatures experienced by the subject in the past are used to calculate out the estimated comfortable temperature. Therefore, the estimated comfortable temperature can be calculated as a temperature at which individual differences as to how individuals feel air temperatures are taken into consideration.

«Other Embodiments»

While the embodiments and variations thereof have been described above, it will be understood that various changes in form and details may be made without departing from the spirit and scope of the claims (e.g., (1) to (2)). The embodiments and the variations thereof may be combined and replaced with each other without deteriorating intended functions of the present disclosure.

(1) The correlation information (12A) is not limited to Equation 1 (CT = 0.31*T+17.8). For example, if temperature-output information (such as a calculation formula, a table, a graph, a diagram, or a map) for outputting, with respect to a temperature of outside air, a temperature that average persons would feel comfortable (average comfortable temperature) is available, the temperature-output information may be employed as the correlation information (12A). The temperature-output information represents a correlation between the temperature of outside air and the average comfortable temperature. The temperature-output information is configured so that the average comfortable temperature is derived from the temperature-output information once the temperature of outside air is determined. For example, the temperature-output information may be configured so that the average comfortable temperature to be output is lower with respect to a lower temperature of outside air. If the temperature-output information is employed as the correlation information (12A), the estimated comfortable temperature for the subject is derived instead of the average comfortable temperature by using, in the temperature-output information, the assigned value T in any one of the first to sixth examples instead of the temperature of outside air.

(2) As shown in FIG. 10, the temperature estimation system (1) may further include an air conditioner (30), which includes the temperature estimation device (10). In this configuration, the temperature estimation device (10) is configured by, for example, electronic components provided in a housing of the air conditioner (30). In the temperature estimation system (1), the temperature estimation device (10) may be configured as an external device separate from the air conditioner (30), and the temperature estimation device (10) and the air conditioner (30) may be communicably connected together in a wired or wireless manner. The air conditioner (30) cools or heats indoor air so that the air temperature in an indoor space reaches a set temperature.

The air conditioner (30) is connected with a management server (40), which manages the experienced temperatures of the subject, or an output device (20) (see FIG. 1). FIG. 10 illustrates a configuration in which the air conditioner (30) is communicably connected with the management server (40). The air conditioner (30) which has acquired an experienced temperature of the subject from the management server (40) or the output device (20) causes the temperature estimation device (10) to calculate out an estimated comfortable temperature for the subject. The air conditioner (30) performs a proper process according to the estimated comfortable temperature for the subject thus calculated out by the temperature estimation device (10). The proper process may be, for example, a process for setting a set temperature of the air conditioner (30) to the estimated comfortable temperature for the subject.

The air conditioner (30) is configured so that the control unit (13) of the temperature estimation device (10) calculates out the estimated comfortable temperature for the subject. With this configuration, if a plurality of subjects is present, the control unit (13) of the temperature estimation device (10) can calculate out estimated comfortable temperatures individually for the plurality of subjects. As a result, the air conditioner (30) can perform such temperature control in which, if any one of the plurality of subjects is a user of the air conditioner (30), the air conditioner (30) causes the temperature estimation device (10) to calculate out an estimated comfortable temperature for the user of the air conditioner (30) and sets the set temperature to the estimated comfortable temperature, thereby making it possible to perform temperature control in conformity with how the user of the air conditioner (30) feels as to air temperatures.

INDUSTRIAL APPLICABILITY

As described above, the present disclosure is usefully applicable to a temperature estimation device, an air conditioner, and a temperature calculation method.

DESCRIPTION OF REFERENCE CHARACTERS

10      Temperature Estimation Device
11A    Acquisition Unit
12      Storage
12A    Correlation Information
13      Control Unit
21      Temperature Sensor

30      Air Conditioner

**Claims**

1.    A temperature estimation device, comprising:

an acquisition unit (11A) configured to acquire environmental information, the environmental information being a value indicative of an environment experienced by a subject in the past; and
a control unit (13) configured to calculate out an estimated comfortable temperature on the basis of the environmental information, the estimated comfortable temperature being a temperature estimated to be a comfortable temperature for the subject.

2.    The temperature estimation device of claim 1, wherein
the environmental information includes an experienced temperature, the experienced temperature being an air temperature of the environment experienced by the subject in the past.

3.    The temperature estimation device of claim 1 or 2, further comprising:

a storage (12) configured to store therein correlation information (12A) indicative of a correlation between the environmental information and the estimated comfortable temperature, wherein
the control unit (13) is configured to perform the calculation of the estimated comfortable temperature further on the basis of the correlation information (12A).

4.    An air conditioner, comprising the temperature estimation device (10) of any one of claims 1 to 3.

5.    A temperature calculation method, comprising:

acquiring environmental information, the environmental information being a value indicative of an environment experienced by a subject in the past; and
calculating out an estimated comfortable temperature on the basis of the environmental information, the estimated comfortable temperature being a temperature estimated to be a comfortable temperature for the subject.

6.    The temperature calculation method of claim 5, wherein
the environmental information includes an experienced temperature, the experienced temperature being an air temperature of the environment experienced by the subject in the past, and

the acquiring includes acquiring the experienced temperature by measuring an air temperature with a temperature sensor (21) carried by the subject.

7. The temperature calculation method of claim 5, wherein

the environmental information includes an experienced temperature, the experienced temperature being an air temperature of the environment experienced by the subject in the past, and
the acquiring includes:

acquiring positional information indicative of a position of the subject; and
acquiring, as the experienced temperature, an air temperature measured at a measurement point closest to the position indicated by the positional information among a plurality of measurement points.

# FIG.1

# FIG.2

# FIG.3

20 — OUTPUT DEVICE

COMMUNICATION TERMINAL — 22

COMMUNICATION UNIT — 221

21 — TEMPERATURE SENSOR

STORAGE — 222

CONTROL UNIT — 223

1

40

MANAGEMENT SERVER

TEMPERATURE ESTIMATION DEVICE

10

# FIG.4

1

S

WEATHER SERVER

20

OUTPUT DEVICE

22 — COMMUNICATION TERMINAL

221 — COMMUNICATION UNIT

222 — STORAGE

223 — CONTROL UNIT

224 — GPS MODULE

40

MANAGEMENT SERVER

TEMPERATURE ESTIMATION DEVICE

10

# FIG.5

L1

| MEASUREMENT TIME | EXPERIENCED TEMPERATURE |
|---|---|
| 12:00 | 22°C |
| 13:00 | 26°C |
| 14:00 | 28°C |
| ⋮ | ⋮ |

ASSIGNED VALUE T

ESTIMATED COMFORTABLE TEMPERATURE CT

22°C ⟶ 24.6°C

26°C ⟶ 25.9°C

28°C ⟶ 26.5°C

# FIG.6

ESTIMATED COMFORTABLE TEMPERATURE CT

26.5°C
25.9°C

24.6°C

12:00          13:00          14:00          TIME

# FIG.7

L2

| MEASUREMENT TIME | AVERAGE VALUE |
|---|---|
| DAY 1 TO DAY N | 22°C |
| DAY 2 TO DAY (N+1) | 26°C |
| DAY 3 TO DAY (N+2) | 28°C |
| ⋮ | ⋮ |

ASSIGNED VALUE T

ESTIMATED COMFORTABLE TEMPERATURE CT

22°C ⟶ 24.6°C

26°C ⟶ 25.9°C

28°C ⟶ 26.5°C

# FIG.8

ESTIMATED COMFORTABLE TEMPERATURE CT

26.5°C

25.9°C

24.6°C

DAY N        DAY (N+1)        DAY (N+2)        TIME

# FIG.9

L3

| DATE ╲ TIME | 0:00 | 1:00 | · · · · · | 23:00 |
|---|---|---|---|---|
| 2020/06/01 | Z1°C | Z2°C | · · · · · | Z3°C |
| 2020/06/02 | Z4°C | Z5°C | · · · · · | Z6°C |
| ⋮ | ⋮ | ⋮ | | ⋮ |

# FIG.10

1

20

30

OUTPUT DEVICE

AIR CONDITIONER

TEMPERATURE ESTIMATION DEVICE — 10

## INTERNATIONAL SEARCH REPORT

| | International application No. |
| --- | --- |
| | PCT/JP2021/024040 |

A. CLASSIFICATION OF SUBJECT MATTER
Int.Cl. F24F11/63(2018.01)i, F24F11/64(2018.01)i, F24F110/10(2018.01)n
FI: F24F11/64, F24F11/63, F24F110:10

According to International Patent Classification (IPC) or to both national classification and IPC

B. FIELDS SEARCHED

Minimum documentation searched (classification system followed by classification symbols)
Int.Cl. F24F11/63, F24F11/64, F24F110/10

Documentation searched other than minimum documentation to the extent that such documents are included in the fields searched
| | | |
| --- | --- | --- |
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2014-194290 A (FUJITSU ADVANCED ENGINEERING LTD.) 09 October 2014 (2014-10-09), paragraphs [0012]-[0072], fig. 1-11 | 1-5<br>6-7 |
| Y | JP 2013-124809 A (MITSUBISHI ELECTRIC BUILDING TECHNO SERVICE CO., LTD.) 24 June 2013 (2013-06-24), paragraphs [0033]-[0115], fig. 1-10 | 6-7 |
| A | JP 2013-068415 A (MITSUBISHI ELECTRIC CORPORATION) 18 April 2013 (2013-04-18), paragraphs [0011]-[0220], fig. 1-27 | 1-7 |

☐ Further documents are listed in the continuation of Box C.     ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 20 August 2021 | 31 August 2021 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2021/024040 |

```
JP 2014-194290 A   09 October 2014    (Family: none)

JP 2013-124809 A   24 June 2013       (Family: none)

JP 2013-068415 A   18 April 2013      (Family: none)
```

Form PCT/ISA/210 (patent family annex) (January 2015)

**REFERENCES CITED IN THE DESCRIPTION**

**Patent documents cited in the description**

- JP 2009092322 A